# EUROPEAN PATENT APPLICATION

(11) **EP 3 932 271 A1**
(43) Date of publication of application: **05.01.2022**
(21) Application number: 20183616.0
(22) Date of filing: 02.07.2020
(51) Int. Cl.: A47J 37/12, A47J 37/06, A47J 45/06

(54) **A TRAY AND A COOKING DEVICE**

(71) Applicant: Koninklijke Philips N.V., 5656 AG Eindhoven (NL)
(72) Inventor: MURBACHER, Werner Karl, 5656 AE Eindhoven (NL); SCHRETTLINGER, Joachim, 5656 AE Eindhoven (NL); OTTI, Thomas, 5656 AE Eindhoven (NL)
(74) Representative: Kapoor, Pavan Puneet

(57) **Abstract**

There is disclosed a tray for receiving food for a cooking device, and cooking device comprising: a housing defining a cooking chamber, the housing having an opening providing access to the cooking chamber. It comprises a tray comprising a body defining a base, and a handle attached to the body, wherein the tray is configured to be received in the housing through the opening, and to be removable from the housing through the opening. When the tray is received in the housing, the handle is moveable with respect to the housing between an extended position, in which the handle extends out of the cooking chamber, and a retracted position, in which the handle is received within the cooking chamber. The cooking device comprises a moving mechanism which is configured to move the handle to the extended position. The handle of the tray may be biased to the extended position.

## Description

### FIELD OF THE INVENTION

The present application relates to a tray for a cooking device, and a cooking device.

### BACKGROUND OF THE INVENTION

Cooking devices, such as hot air and/or steam cookers, typically define a cooking chamber in which a tray is disposed for receiving food for cooking. However, removal of food from the tray or the cooking chamber can be difficult, and can result in burns from the steam or the hot cooking device.

### SUMMARY OF THE INVENTION

According to a first specific aspect there is provided a tray for receiving food for a cooking device, the tray comprising a body defining a base, and a handle attached to the body, the handle being moveable between an extended position and a retracted position; wherein the position of the handle relative to the base changes between the extended position and the retracted position such that the handle is further away from the base in the extended position than in the retracted position; and wherein the handle is biased towards the extended position.

The body may define a flange extending from the base. The handle may be connected to the flange.

The handle may be pivotably connected to the body at a proximal end of the handle, such that the handle is pivotable with respect to the body from the extended position to the retracted position.

The body may define a guide channel in which a distal end of the handle is received in the extended position. The handle may be configured to slide through the guide channel to guide the handle between the extended position and the retracted position.

The distal end of the handle may comprise a stop which is configured to engage with the guide channel to prevent movement beyond the extended position. The distal end of the handle may comprise a stop which is configured to abut against the body in the retracted position to prevent movement beyond the retracted position.

A distal section of the handle, adjacent the distal end, may have an arcuate shape with a fixed radius which is configured to slide through the guide channel. The handle shape may deviate from the arcuate shape at a middle section, adjacent to the distal section, such that the middle section abuts the guide channel when in the retracted position, to prevent movement of the handle beyond the retracted position.

A biasing mechanism may be disposed at, and act on, the proximal end of the handle to bias the handle to the extended position. The biasing mechanism may be a torsion spring.
According to a second aspect, there is provided a cooking device comprising: a housing defining a cooking chamber, the housing having an opening providing access to the cooking chamber; and a tray comprising a body defining a base, and a handle attached to the body, wherein the tray is configured to be received in the housing through the opening, and to be removable from the housing through the opening; wherein, when the tray is received in the housing, the handle is moveable with respect to the housing between an extended position, in which the handle extends out of the cooking chamber, and a retracted position, in which the handle is received within the cooking chamber; whereby the cooking device comprises a moving mechanism which is configured to move the handle to the extended position. The cooking device may further comprise a cover which is configured to cooperate with the housing to close the opening. Removing the cover from the opening may cause the moving mechanism to automatically move the handle from the retracted position to the extended position.

The moving mechanism may be a biasing mechanism which is configured to bias the handle towards the extended position.

The tray may be in accordance with the first aspect.

The moving mechanism may comprise a hook coupled to the cover which is configured to engage a pin on the tray, so as to move the handle from the retracted position to the extended position when the cover is removed from the opening.

These and other aspects will be apparent from and elucidated with reference to the embodiments described herein.

### BRIEF DESCRIPTION OF THE DRAWINGS

Exemplary embodiments will now be described, by way of example only, with reference to the following drawings, in which:
Figures 1A and 1B schematically show a first example cooking device in an open and closed configuration respectively, with a first example tray;
Figure 2 schematically shows the first example tray in more detail;
Figure 3 schematically shows a cross-sectional view of a second example tray for a cooking device;
Figure 4 schematically shows a third example trap for a cooking device;
Figures 5A and 5B schematically show a second example cooking device in an open and a closed configuration respectively;
Figures 6A and 6B schematically show a third example cooking device in a closed and an open configuration respectively;
Figures 7A and 7B schematically show a fourth example cooking device in a closed and an open configuration respectively.

### DETAILED DESCRIPTION OF THE EMBODIMENTS

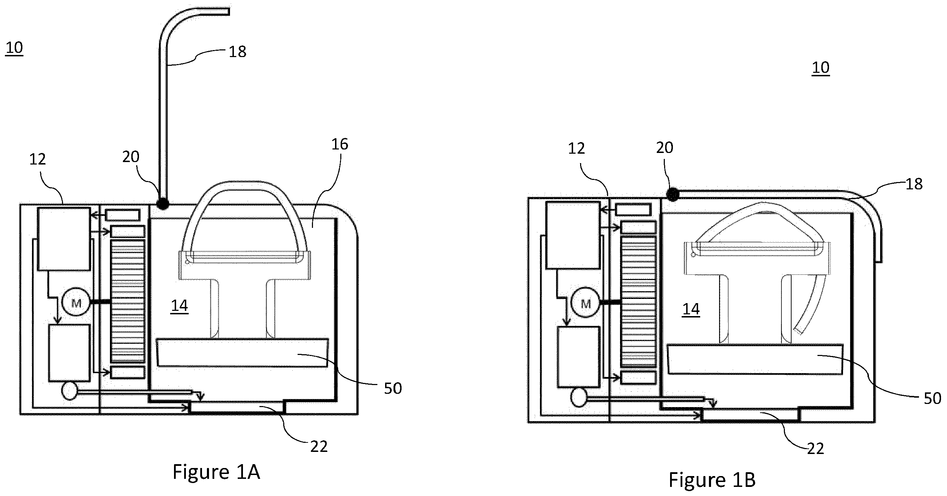

Figures 1A and 1B show a first example cooking device 10 comprising a first example tray 50. The cooking device 10 is a hot air and steam circulation cooking device.

The cooking device 10 comprises a housing 12 defining a cooking chamber 14. In this example, the cooking chamber 14 defines a generally rectangular cuboid shape. In other examples, the cooking chamber may define any suitable shape. The housing 12 comprises an opening 16 which provides access to the cooking chamber 14. In this example, the opening 16 is provided at the top of the housing 12.

The cooking device 10 also comprises a cover 18 which is configured to cooperate with the housing 12 to close the opening 16. The cooking device 10 comprises two configurations: an open configuration, in which the cover 18 is removed from the housing 12 so that the opening 16 is exposed to provide access to the cooking chamber 14; and a closed configuration in which the opening 16 is closed by the cover 18.

In this example, the cover 18 is pivotably coupled to the housing 12 at a hinge 20. The cover 18 is therefore pivotably movable between an open position (such as shown Figure 1A) defining the cooking device in the open configuration, and a closed position (Figure 1B), defining the cooking device 10 in the closed configuration. The cover 18 is configured to provide an airtight seal around the opening 16 when in the closed position, so as to fluidically isolate the cooking chamber 14 from the atmosphere outside the housing 12.

The cooking device 10 comprises a steam generator 22, which is provided at the bottom of the cooking chamber 14 to generate steam.

The tray 50 is disposed in the cooking chamber 14 of the housing 12 in use. The tray 50 is configured to be removable from the cooking chamber 14 through the opening 16 (e.g. when the cover 18 is removed) and is configured to be received in the cooking chamber 14 through the opening 16. The tray 50 is configured to carry foodstuffs for cooking in the cooking chamber 14 or for supporting accessories for cooking food.

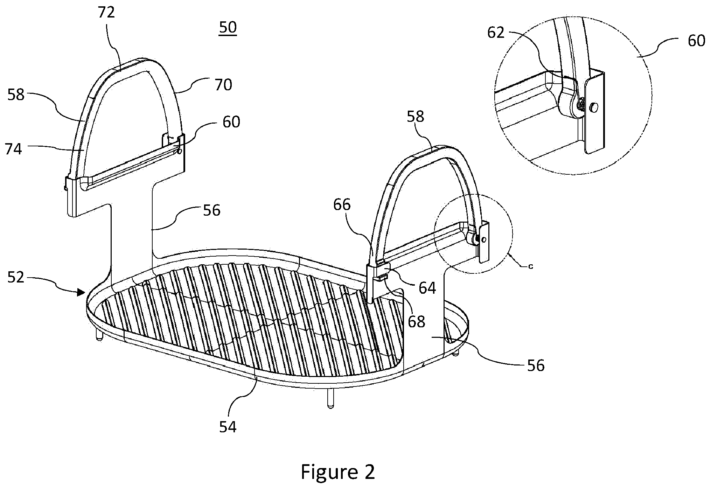

Figure 2 shows an oblique view of the first example tray 50 in more detail.

The tray 50 comprises a body 52 defining a base 54 on which foodstuffs may be placed. In this example, the base 54 is generally rectangular corresponding to the cross-sectional shape of the cooking chamber 14, and planar. The base 54 is smaller than the cross-section of the cooking chamber 14 and the opening 16 so that it removably fits into the cooking chamber 14 through the opening 16. The body 52 further defines a pair of flanges 56 which extend from the base 54, perpendicular to the base 54. The flanges 56 extend from the base 54 on opposing sides of the base 54.

The tray comprises two handles 58 which are each connected to a respective flange 56 on either side of the base 54. In other examples, there may be only one handle, or more than two handles, and they may be connected to any suitable part of the body.

In this example, the handles 58 are each movably attached to the body 52, and are each configured to move between a retracted position and an extended position. The position of the handle 58 relative to the base 54 changes between the extended position and the retracted position such that the handle 58 is further away from the base 54 in the extended position than in the retracted position. Figure 2 shows the handles 58 in the extended position.

Each handle 58 is connected to the body 52 in the same way. Therefore, the description below will be directed on only a single handle, but it will be appreciated that applies equally to the other handle.

The handle 58 is pivotably connected to the body 52 at a proximal end 60 of the handle 58, such that the handle 58 is pivotable with respect to the body 52 between the retracted position and the extended position. The handle 58 therefore moves between the retracted position and the extended position by pivoting movement about the proximal end 60 of the handle 58. The handle 58 can be moved to the retracted position from the extended position by pushing the handle 58 towards the base 54.

In this example, the tray 50 comprises a moving mechanism which is configured to move the handle 58 to the extended position. The moving mechanism in this example is in the form of a biasing mechanism, with which the handle 58 is biased to the extended position. It can be seen in a close-up view of the proximal end 60 of the handle 58 in Figure 2 that the handle 58 is biased by a torsion spring 62 is disposed at the proximal end 60, and which acts on the proximal end 60 of the handle 58 to bias the handle 58 to the extended position.

In some examples, a biasing mechanism which provides a biasing force to bias the handle to the extended position may be provided in any suitable form. For example, the biasing force may be provided by a compression spring, a tension spring, or a pneumatic force. Alternatively, the biasing force may be provided by gravity acting on a counterweight on the handle on an opposing side of a pivot point to which the handle is pivotably attached.

In this example, the handle 58 is received in a guide channel 64 defined in the flange 56 of the body 52. The guide channel 64 is configured to guide movement of the handle 58 as it is pivoted between the extended position and the retracted position. When in the extended position (as shown in Figure 2), a distal end 66 of the handle 58 is received in the guide channel 64.

The distal end 66 of the handle 58 comprises a stop 68 which is configured to engage with the guide channel 64 to prevent movement of the handle 58 beyond the extended position. In other examples, there may be no guide channel defined in the body. There may additionally or alternatively be a stop defined in the body at the proximal end of the handle which prevents movement of the handle beyond the extended position, or any other form of stop which prevents movement of the handle beyond the extended position or the retracted position. In yet other examples, there may be no stop at all to prevent movement of the handle beyond the extended position.

In this example, the handle 58 comprises a proximal section 70, a middle section 72 and a distal section 74. The distal section 74 of the handle 58 is adjacent to the distal end 66 and comprises an arcuate shape with a fixed radius. The distal section 74 is configured to freely slide through the guide channel 64. The radius of curvature of the distal section 74 is equivalent to the distance between the guide channel 64 and the proximal end 60 of the handle 58 at which the handle 58 is pivotably connected. At the junction between the distal section 74 and the middle section 72 of the handle 58, the profile of the handle deviates from the arcuate shape such that the middle section 72 abuts the guide channel 64 at the retracted position to prevent movement of the handle 58 beyond the retracted position.

In some examples, the middle section may simply comprise the same arcuate profile as the distal end such that there may be nothing preventing movement of the handle beyond the retracted position. In other examples, the distal end of the handle may alternatively or additionally comprise a body stop to abut against the body in the retracted position to prevent movement of the handle beyond the retracted position.

Returning to Figures 1A and 1B, the tray 50 is received in the cooking chamber 14 of the housing 12. It can be seen from Figures 1A and 1B that the handles 58 of the tray 50 are moveable between the extended position, in which the handles 58 extend out of the cooking chamber 14, and the retracted position, in which the handles 58 are received fully within the cooking chamber 14.

In Figure 1A, in which the cooking device 10 is in the open configuration with the cover 18 removed from the opening 16, the tray 50 is in the extended position, as the biasing mechanism biases the handle 58 to the extended position, and there is no opposing force on the handle 58 to prevent the handle 58 from being in the extended position. Therefore, removal of the cover 18 from the opening 16 causes the moving mechanism (i.e. the torsion spring in this example) to automatically move the handle from the retracted position to the extended position.

In Figure 1B, in which the cooking device 10 is in the closed configuration with the cover 18 closing the opening 16 of the housing 12, the tray 50 is in the retracted position. When the cover 18 is placed over the opening 16, the cover 18 engages the handles 58 and provides a counteracting force against the biasing mechanism to thereby force the handles 58 to the retracted position.

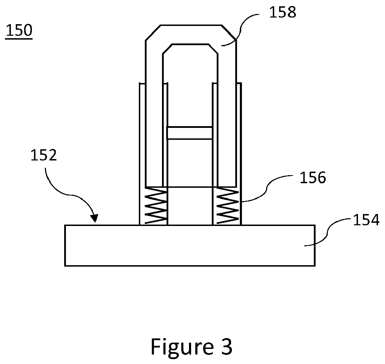

Figure 3 shows a cross-sectional view of a second example tray 150, which may be used in the housing 12 of the cooking device 10 instead of the first example tray 50.

The tray 150 comprises a body 152 defining a base 154 on which foodstuffs may be placed. The body 152 comprises two pairs of flanges 156 on opposing sides of the base 154 such that there are a total of four flanges 156 (only one pair of flanges 156 is shown in the cross-section). A handle 158 is coupled to each pair of flanges 156 such that there are two handles 158 (only one is shown in Figure 3). The handles 158 are moveable between a retracted position and an extended position, where the handle 158 is further away from the base 154 in the extended position than in the retracted position.

The handles 158 are each coupled to the respective pairs of flanges 156 in the same manner as will be described below with respect to one pair of flanges 156 and a single handle 158. It will be appreciated that this description applies equally to both handles 158.

In this example the pair of flanges 156 each define a tube extending perpendicularly from the base 154. The handle 158 comprises two legs which are each disposed within a respective tube 156. The tray 150 comprises a moving mechanism which is configured to move the handle 158 within the tubes 156 to the extended position.

In this example, the moving mechanism is in the form of a biasing mechanism, which is configured to bias the handle 158 to the extended position. The biasing mechanism is in the form of a compression spring which is disposed within each tube 156, and configured to act against the handle 158 to bias it to the extended position.

In some examples, there may be only a single flange at each side of the base in the form of a tube extending from the base, and the handle may only have a single leg which is disposed within the tube and biased to the extended position.

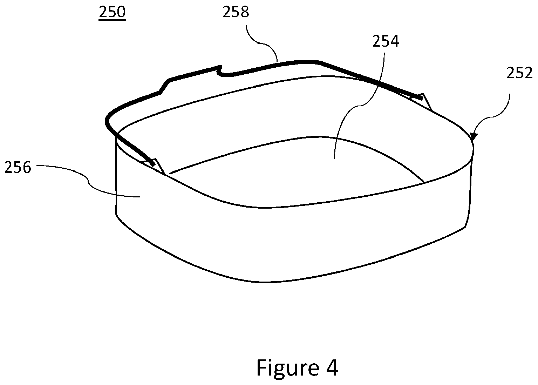

Figure 4 shows an oblique view of a third example tray 250.

The tray 250 comprises a body 252 defining a base 254 on which foodstuffs may be placed. The body 252 further comprises a flange 256 extending perpendicularly from the base 154 around the perimeter of the base 254 to define a wall 256, such that the tray 250 resembles a bucket. Having a wall 256 around the perimeter of the base 254 means that more food can be reliably received on the tray 250.

The tray 250 comprises a single handle 258 in this example which is coupled to the wall 256. The handle 258 comprises two legs extending from a spine, and each leg is coupled to the wall 256 on opposing sides of the perimeter of the wall 256.

The handle 258 is pivotably moveable between a retracted position and an extended position, in which the handle 258 is further away from the base 254 in the extended position than in the retracted position.

In this example, the tray 250 comprises a moving mechanism in a similar manner to the first example tray 50. The moving mechanism in the third example tray 250 is a biasing mechanism, such as a torsion spring, which is configured to bias the handle 258 to the extended position.

Although various examples of trays 50, 150, 250 have been described with different flanges and moving mechanisms, it will be appreciated that these variations are interchangeable, and not limited to the specific example in which they are described. For example, a tray comprising a wall in the form of a bucket as described with reference to the third example tray 250 may alternatively comprise a moving mechanism as described with reference to the second example tray 150.

Further, the tray may comprise any suitable number of handles, which may be connected to the body in any suitable arrangement to provide a portion which is easy for a user to grip to remove the tray from the cooking chamber of a cooking device.

Although each of the example trays has been describe with handles attached to flanges, the handles may alternatively be coupled directly to the base or any other suitable part of a body.

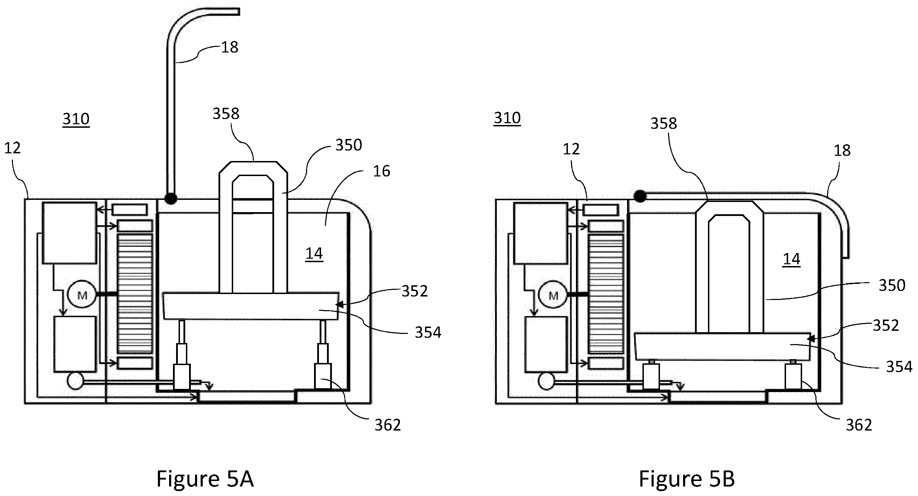

Figures 5A and 5B show a cross-sectional view of a second example cooking device 310. The second example cooking device 310 comprises similar features to the first example cooking device 10, which similar features will be denoted using the same reference numerals as the first example cooking device 10.

The second example cooking device 310 comprises a housing 12 defining a cooking chamber 14 and an opening 16. The opening 16 provides access to the cooking chamber 14, and the second example cooking device 310 comprises a cover 18 which is configured to seal the opening 16 in the same manner as the first example cooking device 10.

The second example cooking device 310 differs from the first example cooking device 10 in that it comprises a simple tray 350 configured to be received in the cooking chamber 14 of the housing 12. The tray 350 comprises a body 352 defining a base 354 for receiving foodstuffs, and a pair of handles 358 extending from the body 352. The tray 350 in this example has no moving parts.

The second example cooking device 310 also differs from the first example cooking device 10 in that the housing 12 comprises a moving mechanism. In this example, when the tray 350 is received in the housing 12, the handles 358 are moveable (by the moving mechanism) with respect to the housing 12 between an extended position, in which the handles 358 extend out of the cooking chamber 14 (shown in Figure 5A), and a retracted position, in which the handles 358 are received within the cooking chamber 14 (shown in Figure 5B).

In this example, the moving mechanism is configured to move the whole tray 350 so as to move the handles 258 to the extended position. The moving mechanism is a biasing mechanism 362 on which the tray 350 is configured to be received. The biasing mechanism 362 is a pair of pneumatic cylinders which are configured to bias the tray 250 towards the opening 16, to bias the handles 358 to the extended position.

In Figure 5A, in which the cooking device 310 is in the open configuration with the cover 18 removed from the opening 16, the tray 350 is received in the cooking chamber 14 of the housing 12 in the extended position. There is no force opposing the biasing force on the tray 350, such that the handles 358 (and the whole tray 350) are moved to the extended position by the moving mechanism.

When the cover 18 is placed over the opening 16 such as shown in Figure 5B, the cover 18 engages the handles 358 and provides a counteracting force against the biasing mechanism to thereby force the tray 350 into the cooking chamber 14 away from the opening 16, to thereby force the handles 358 to the retracted position.

Although the second example cooking device 310 has been described with a simple tray 350 having no moving parts, it will be appreciated that the first example tray 50, the second example tray 150, the third example tray 250, or any suitable variation thereof having moving parts may be received in the housing of the second cooking device. The housing of the second cooking device may also receive a tray with moveable handles, but without a biasing mechanism to move the handles with respect to the base of the tray.

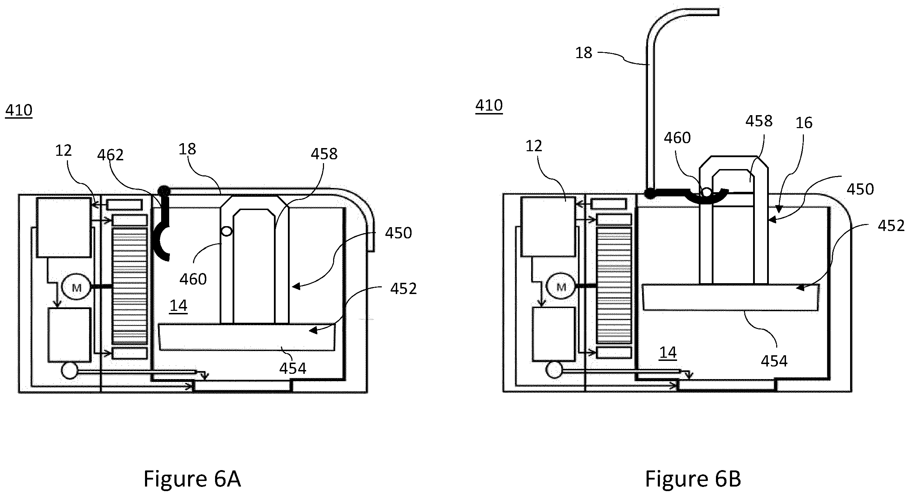

Figures 6A and 6B show a cross-sectional view of a third example cooking device 410. The third example cooking device 410 comprises similar features to the first example cooking device 10, which similar features will be denoted using the same reference numerals as the first example cooking device 10.

The third example cooking device 410 comprises a housing 12 defining a cooking chamber 14 and an opening 16 to provide access to the cooking chamber 14. The third example cooking device 410 comprises a cover 18 which is configured to seal the opening 16 in the same manner as the first example cooking device 10.

The third example cooking device 410 differs from the first example cooking device 10 in that it comprises a tray 450 having no moveable parts, which is configured to be received in the cooking chamber 14 of the housing 12. The tray 450 in this example comprises a body 452 defining a base 454 on which foodstuffs may be received, and a pair of handles 458 extending from the body 452 (only one handle is shown). A pin 460 is provided on each of the handles 458.

When the cover 18 closes the opening 16, and the tray is received in the cooking chamber 14, the handles 458 of the tray 450 are in a retracted position, in which the handles 458 are wholly received within the cooking chamber 14. The third example cooking device 410 differs further from the first example cooking device 10 and the second example cooking device 310 in that the cover 18 comprises a moving mechanism which is configured to move the handles 458 of the tray 450 from the retracted position to an extended position when the cover 18 is removed from the opening 16. In the extended positon, the handles 458 extend out of the cooking chamber 14.

The moving mechanism comprises a hook 462 coupled to the cover 18. The hook 462 is fixedly coupled to the cover 18 and is configured to engage the pin 460 on the tray 450, so that when the cover 18 is removed from the opening 16, the tray 450 is simultaneously pulled out of the cooking chamber 14, such that the handles 458 move to the extended position. In this example, the cover 18 is removed from the opening 16 by pivotably rotating the cover 18. This results in rotating motion of the hook 462 which engages the pin 460 as the cover 18 is pivotably rotated to the open position.

It will be appreciated that in other examples, the cover may be removed by any motion, and the hook may be configured to engage the pin by that motion. In further examples, the cover may be removed by any motion, and the hook may be moveably coupled to the cover so that it can be actuated by a user to engage the pin as the cover is removed.

Although the third example cooking device 410 has been described with a simple tray 450 having no moving parts, in other examples, a tray having a handle which is moveable with respect to the base of the tray and which comprises a pin, may be received in the cooking chamber 14. Engagement of the hook 462 with the pin on the handle may be configured to move the handle with respect to the tray base to an extended position, rather than moving the whole tray.

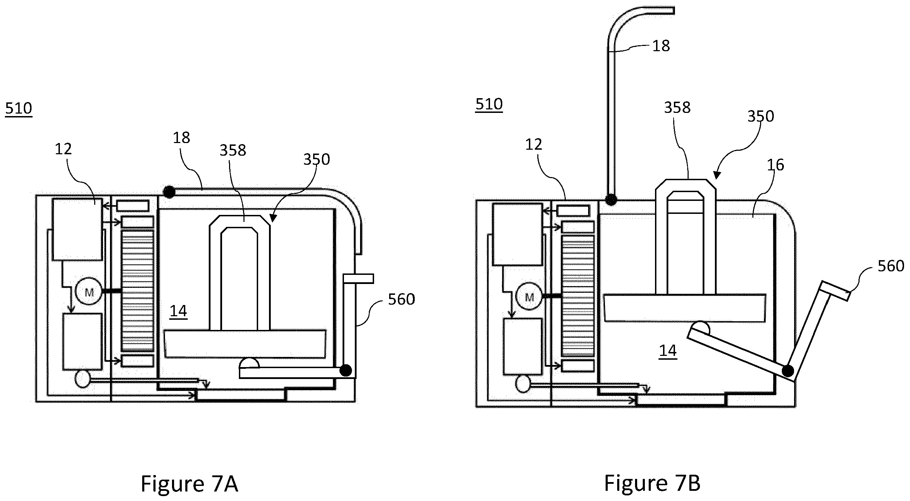

Figures 7A and 7B show a cross-sectional view of a fourth example cooking device 510. The fourth example cooking device 510 comprises similar features to the second example cooking device 310, which similar features will be denoted using the same reference numerals as the second example cooking device 310. The fourth example cooking device 510 comprises a housing 12 defining a cooking chamber 14 and an opening 16 for providing access to the cooking chamber 14. It also comprises a cover 18 which is configured to seal the opening 16.

A simple tray 350 is received in the housing 12, such as the tray 350 described with reference to the second example cooking device 310. The tray 350 is moveable in the cooking chamber 14 so that the handles 358 may move with respect to the housing 12 between the retracted position, in which the handles 358 are wholly received within the cooking chamber 14, and the extended position, in which the handles 358 are extending out of the cooking chamber 14.

The fourth example cooking device 510 differs from the second example cooking device 310 in that it comprises a different moving mechanism. In this example, the moving mechanism comprises a lever arm 560 which is pivotably received in a side of the housing 12, and which extends from within the cooking chamber 14 to outside the housing 12. The tray 350 is configured to rest on the lever arm 560 in the cooking chamber 14, and a part of the lever arm 560 extending out of the housing 12 can be actuated (i.e. moved such that the lever arm 560 pivots) by a user to push the tray 350 out of the cooking chamber 14 towards the opening 16, and to thereby move the handles 358 of the tray 350 from the retracted position to the extended positon.

In other examples, the tray received in the housing may have handles which are movable with respect to the base, and the lever arm of the moving mechanism may be configured to actuate movement of the handles only, rather than of the whole tray. It will be appreciated that the first example tray 50, the second example tray 150, the third example tray 250 and any suitable variations thereof may also be received in the housing of the second example cooking device 310, the third example cooking device 410, or fourth example cooking device 510.

Although the cooking device has been described as a hot air and steam cooking device, it will be apparent that in other examples, the cooking device may be any suitable cooking device.

Although the tray has been described as having a planar base for supporting food or accessories, in some examples, the base may not be planar. In some examples, the base may be solid or may comprise a frame for supporting separate compartments, baskets, pots, or large pieces of food. Separate compartments, baskets or pots may be suspended from the frame of the base, or stand on the base. The base may be air-permeable, for example, by having a woven base such as a basket.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A tray (50, 150, 250) for receiving food for a cooking device, the tray comprising a body (52, 152, 252) defining a base (54, 154, 254), and a handle (58, 158, 258) attached to the body, the handle being moveable between an extended position and a retracted position;
wherein the position of the handle relative to the base changes between the extended position and the retracted position such that the handle is further away from the base in the extended position than in the retracted position; and
wherein the handle is biased towards the extended position.

2. A tray (50, 150, 250) according to claim 1, wherein the body (52, 152, 252) defines a flange (56, 156, 256) extending from the base (54, 154, 254), and wherein the handle (58, 158, 258) is connected to the flange.

3. A tray (50) according to claim 1 or 2, wherein the handle (58) is pivotably connected to the body (52) at a proximal end (60) of the handle, such that the handle is pivotable with respect to the body from the extended position to the retracted position.

4. A tray (50) according to any of claims 1-3, wherein the body (52) defines a guide channel (64) in which a distal end (66) of the handle (58) is received in the extended position, wherein the handle (58) is configured to slide through the guide channel (64) to guide the handle (58) between the extended position and the retracted position.

5. A tray (50) according to claim 4, wherein the distal end (66) of the handle (58) comprises a stop (68) which is configured to engage with the guide channel (64) to prevent movement beyond the extended position.

6. A tray (50) according to claim 4 or 5, wherein the distal end (66) of the handle (58) comprises a stop (68) which is configured to abut against the body (52) in the retracted position to prevent movement beyond the retracted position.

7. A tray (50) according to any of claims 4-6, wherein a distal section (74) of the handle (58), adjacent the distal end (66), has an arcuate shape with a fixed radius which is configured to slide through the guide channel (64).

8. A tray (50) according to claim 7, wherein the handle (58) shape deviates from the arcuate shape at a middle section (72), adjacent to the distal section (74), such that the middle section (72) abuts the guide channel (64) when in the retracted position, to prevent movement of the handle (58) beyond the retracted position.

9. A tray (50) according to any of claims 1-8, wherein a biasing mechanism (362) is disposed at, and acts on, a proximal end (60) of the handle (58) to bias the handle (58) to the extended position.

10. A tray (50) according to claim 9, wherein the biasing mechanism (362) is a torsion spring (62).

11. A cooking device (10, 310, 410, 510) comprising:
a housing (12) defining a cooking chamber (14), the housing (12) having an opening (16) providing access to the cooking chamber (14); and
a tray (50, 150, 250, 350, 450) comprising a body (52, 152, 252, 352, 452) defining a base (54, 154, 254, 354, 454), and a handle (58, 158, 258, 358, 458) attached to the body, wherein the tray is configured to be received in the housing (12) through the opening (16), and to be removable from the housing (12) through the opening (16);
wherein, when the tray (50, 150, 250, 350, 450) is received in the housing, the handle is moveable with respect to the housing between an extended position, in which the handle extends out of the cooking chamber, and a retracted position, in which the handle is received within the cooking chamber;
whereby the cooking device (10, 310, 410, 510) comprises a moving mechanism which is configured to move the handle to the extended position.

12. A cooking device (10, 310, 410) according to claim 11, further comprising a cover (18) which is configured to cooperate with the housing (12) to close the opening (16); and
wherein removing the cover (18) from the opening (16) causes the moving mechanism to automatically move the handle (58, 358, 458) from the retracted position to the extended position.

13. A cooking device (10, 310, 410, 510) according to claim 11 or 12, wherein the moving mechanism is a biasing mechanism (62, 362) which is configured to bias the handle (58, 158, 258, 358) towards the extended position.

14. A cooking device (10) according to any of claims 11-13, wherein the tray (50, 150, 250) is in accordance with any of claims 1-10.

15. A cooking device (410) according to any of claims 12-14, wherein the moving mechanism comprises a hook (462) coupled to the cover (18) which is configured to engage a pin (460) on the tray (450), so as to move the handle (458) from the retracted position to the extended position when the cover (18) is removed from the opening (16).
